Europäisches Patentamt

European Patent Office

Office européen des brevets

(11) Publication number: **0 538 559 A2**

# EUROPEAN PATENT APPLICATION

(21) Application number: **92111711.5**

(22) Date of filing: **09.07.92**

(30) Priority: **22.10.91 US 781103**

(43) Date of publication of application:
**28.04.93 Bulletin 93/17**

(84) Designated Contracting States:
**AT BE CH DE DK ES FR GB GR IT LI LU MC NL PT SE**

(51) Int. Cl.⁵: **H04M 1/00, H04M 11/06**

(71) Applicant: **PLANTRONICS, INC.**
**337 Encinal Street**
**Santa Cruz, California 95061-1802(US)**

(72) Inventor: **Tymoczko, John, Jr.**
**38 Holmes Drive**
**San Jose, California 95127(US)**
Inventor: **Sanders, Lee A.**
**9860 E. Zayante**
**Felton, California 95018-9041(US)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20**
**W-8000 München 86 (DE)**

(54) **Telephone headset for personal computer.**

(57) A telephone headset apparatus and a method of use of said apparatus in conjunction with a computer modem. The telephone headset is coupled to the same telephone service line as the modem, and is equipped with level detection circuitry for disabling the telephone headset when the modem is activated, so that voice communication does not interfere with operation of the modem. Telephone calls are initiated in a conventional manner using the modem's dialing hardware and software. After the dialing sequence is executed by the modem, the user switches the modem off, the telephone circuit being held open by the telephone headset. The user may alternate between voice communication and data communication without the necessity of re-dialing the receiving party.

**FIG.1**

This invention relates generally to the field of telephony, and more particularly to a telephone headset for use with a personal computer.

In the rapidly advancing field of personal type computers for home or business use, it is now common for such computers to be equipped with a full range of features and peripheral equipment, including large capacity mass storage devices such as hard disk drives, mouse- or pen-type pointing devices, integrated document facsimile machines, and telephone modems. It is also becoming increasingly common for such features to be incorporated into relatively small, lightweight "laptop" or "notebook" sized personal computers, which may be easily and conveniently transported, such as on vacations, business trips or field visits.

The inclusion of telephone modems in portable computers has proven to be highly desirable, since modems allow users away from their home or office to efficiently exchange information with other computers. Thus, for example, a business person on out-of-town business can communicate with his or her office from a hotel room, airport, or any other location having access to a telephone line, thereby continuing to conduct daily business even though not in the office. A field service technician can consult with his or her home office directly from a client's site, thereby increasing the efficiency and effectiveness of a service call.

Computer modems typically have the capability to both make and receive telephone calls. Modems include dialing hardware and software which allow the computer user to enter a telephone number using the computer's keyboard, leaving the modem to connect to the telephone service line and generate the conventional dual-tone multifrequency (DTMF) dialing tones to initiate the desired telephone call. A modem on the receiving end can detect the incoming call, "answer" it by connecting itself to the telephone service line, and begin communicating with the calling modem via a modulated carrier signal.

In order to establish communication between two modems, it is necessary that the receiving modem be placed in an "answer" mode in which it is connected to the telephone service line and is waiting for an incoming call. If a telephone call from a modem is answered by a person, the calling modem will not detect the expected "handshaking" sequence of another modem and will typically abort the attempt. One way of ensuring that a modem will answer each call is to dedicate a separate telephone service line to modem communication, and keep the modem connected to that line and in a constant "answer" mode. In practice, however, this is not always possible, since most residences and many offices do not have a spare telephone line to dedicate to this purpose. Thus, modem communication often involves two telephone calls: a first call from the caller to a person at the receiving end, during which call the two people can arrange for the person at the receiving end to connect the modem to the line and wait for the calling modem's call; and a second call, initiated by the calling party and answered by the receiving modem.

During communication between two modems, no voice communication between the calling end and receiving end can take place, since this would interfere with the modems' operation. In fact, the mere connection of other telephones to the telephone line, such as if another extension were taken off-hook at either the calling or receiving end, can interfere with the exchange of data between the modems, since connection of a phone to the telephone line typically causes momentary voltage or current spikes on the line, and may also cause a decrease in signal level to all connected devices.

The above-described method of initiating modem communication is inefficient, since it involves both a telephone and a modem at both the calling and receiving ends, and since it involves two telephone calls. Although a common and commercially available one-line to two-line splitter can be used to allow both a telephone and a modem to be connected to the same line at once, this does not solve the problem since, as noted above, the connection of a telephone to the telephone line can interfere with the exchange of data between the two modems.

It is believed by the inventors, therefore, that it would be desirable to provide a telephone which, even when connected to a telephone line, would not interfere with modem communication occurring on that line, but would allow voice communication over that line before and/or after the exchange of data between two modems.

It is accordingly a feature of the present invention that a telephone is provided which is adapted for use in conjunction with a computer modem. In particular, it is a feature of the present invention that the telephone is capable of automatically detecting the presence of a modem connected to the line, so that the telephone can automatically enter into a standby state in which it will not interfere with modem communication.

It is another feature of the present invention that the telephone can automatically leave this standby state when modem communication on the telephone line ceases, so that voice communication can be resumed.

It is yet another feature of the present invention that a telephone is provided which takes advantage of the dialing and answering capabilities of a modem, providing only those facilities not provided by a modem to support voice communication.

Still another feature of the present invention is that the voice circuitry of the telephone is miniaturized and contained within a small, lightweight housing modularly connectable to a computer, or, alternatively, disposed along with the modem within the computer itself.

In accordance with one embodiment of the present invention, a headset telephone is provided which is particularly adapted for use in conjunction with an off-the-shelf computer modem. The telephone may be built-in to the computer by the computer manufacturer, or coupled via a modular telephone connector to the same line as a computer's modem, either by means of a connector socket provided in the modem for this purpose or by means of a commercially available one-line to two-line splitter. Telephone calls are initiated by the user from the computer's keyboard, using the off-the-shelf software normally used by the computer to instruct the modem to initiate a call. The modem's dialing circuitry connects to the telephone line, and generates the designated DTMF dialing tones. When the dialing sequence is completed, the user switches off the modem by depressing an appropriate key on the keyboard (for example the 'ESC' key), leaving only the headset connected to the telephone line. The user can initiate the call with voice communication, inform the receiving party to switch to modem communication, then switch back to voice communication when modem communication has ceased. Incoming calls may be detected by the modem in a conventional manner, and the headset switched on if the calling party desires voice communication.

Level detection circuitry associated with the headset automatically detects when the modem is connected to the line, and takes the headset "off-line", so that interference with modem communication is prevented. When the modem is disconnected, the level detection circuitry automatically re-connects the headset to the line, so that voice communication may be resumed without interruption and without the need for manual actuation.

The foregoing and other features of the present invention will be best appreciated with reference to a detailed description of a particular embodiment of the invention, which follows, when read in conjunction with the accompanying drawings, wherein:

Figure 1 is a diagram of a headset telephone in accordance with one embodiment of the present invention;

Figure 2 is a schematic diagram of the circuitry of the headset of Figure 1; and

Figure 3 is a block diagram showing the interconnection of the headset of Figure 1 with a modem.

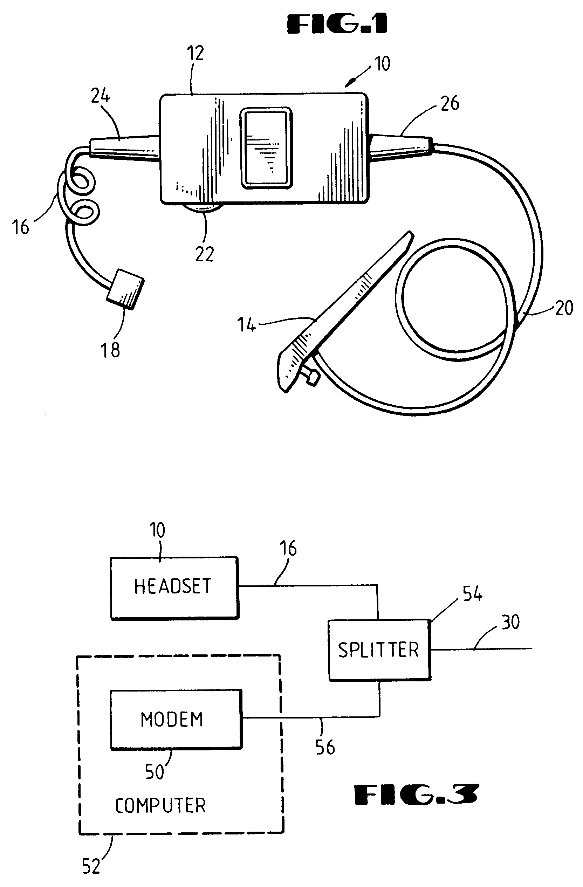

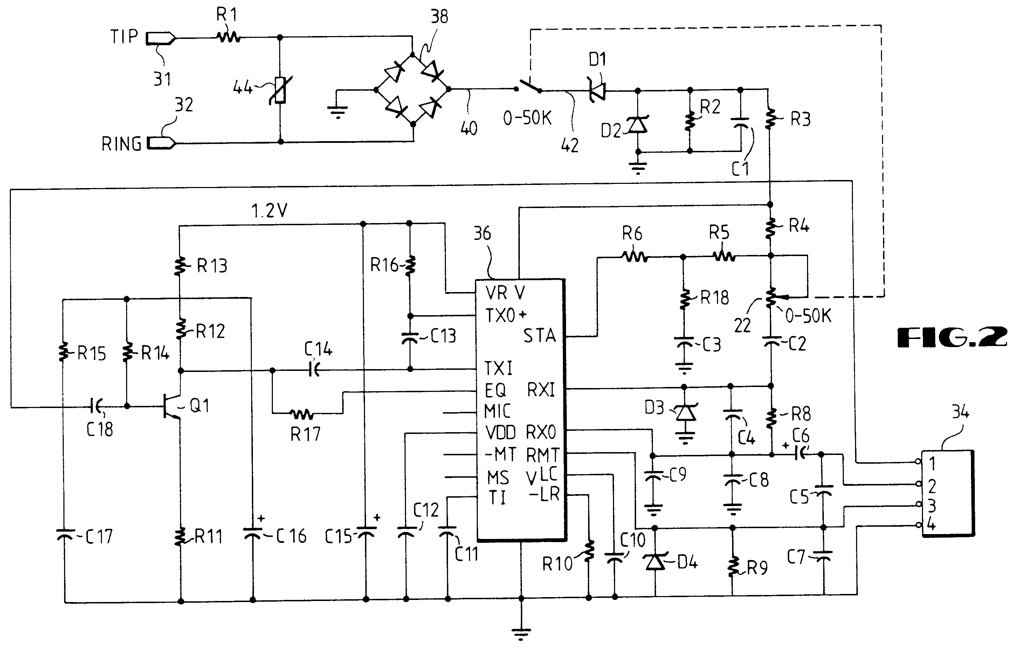

Referring to Figure 1, an illustration of a headset telephone 10 in accordance with one embodiment of the present invention is shown. Headset telephone 10 comprises a housing 12 for containing telephone circuitry to be hereinafter described in greater detail; a headset 14 containing a microphone transducer and receiver transducer; a cable 16 for coupling housing 12 to a telephone line, cable 16 having a standard modular telephone connector 18 disposed on its end; and a cable 20 for coupling headset 14 to housing 12. Housing 12 is preferably made of molded plastic or the like, and has dimensions of approximately $2\frac{1}{2}$ inches by $1\frac{1}{4}$ inches by 1 inch. Disposed on one side of housing 12 is a wafer-style volume control 22 which, below its lowest volume setting also functions as an on-hook/off-hook switch for telephone 10. Flexible strain relief collars 24 and 26 help to prevent damage to cables 16 and 20, respectively, at the respective points of entry of cables 16 and 20 into housing 12.

Headset 14 itself may be one of a number of commercially available telephone headset devices, such as that disclosed in U.S. Patent No. 4,720,857 to Burris et al., or in U.S. Patent No. 3,548,118 to Hutchings, each assigned to the assignee of the present application and hereby incorporated by reference. The arrangement disclosed in the Burris et al. patent is embodied in a headset commercially sold by Plantronics, Inc., the assignee of the present application, under its trademark OMNISET®

Turning now to Figure 2, a schematic diagram of telephone circuitry contained within housing 12 is shown. In accordance with the presently disclosed embodiment of the invention, the circuitry of Figure 2 functions as an interface between a conventional two-wire TIP/RING telephone service line 30, which attaches to the circuitry of Figure 2 at TIP terminal 31 and RING terminal 32, and a four-wire telephone headset line. The connection of the circuitry of Figure 2 with TIP/RING telephone service line 30 is preferably accomplished through the use of a conventional RJ 11/14/45 modular telephone connector. Connection of headset 14 to the circuitry of Figure 2 occurs at terminal 34 of Figure 2. This connection may be hard-wired, or may be accomplished through the use of a suitable four-conductor modular connector.

At the heart of the circuitry of Figure 2 is a voice circuit 36, which may be any one of several well-known and commercially available integrated circuits, such as the MC34014 manufactured by Motorola Corporation, DC power for voice circuit 36 is provided from TIP/RING telephone service line 30 in a conventional manner. As a result, telephone 10 in accordance with the presently disclosed embodiment of the invention is "line powered", requiring no internal power supply such as a battery or the like. In particular, the DC component of the electrical signal appearing on TIP line 31 and RING line 32 is rectified and steered by diode bridge 38, so that a positive DC voltage appears on line 40. A hook-switch 42, which as previously noted is provided as part of wafer-style volume control 22, allows the telephone circuitry of Figure 2 to be electrically uncoupled from TIP line 31 and RING line 32. When hook-switch 42 is open, no DC power is applied to the V + power supply terminal of voice circuit 36, putting the circuitry of Figure 2 in an on-hook condition.

A surge control device 44, which may be a silicon-controlled rectifier or the like, prevents excessive voltages (such as surges, spikes, and the like) from being applied to the circuitry of Figure 2. Resistors R1, R2, and C1 comprise a low-pass filter which prevents high frequency noise from being applied to headset 14 through the internal capacitance of diode bridge 38 and zener diode D1.

In order that the telephone 10 in accordance with the present embodiment of the invention be well-suited for use in conjunction with a computer modem, the circuitry of Figure 2 is provided with level-detection circuitry for putting telephone 10 in an "on-hook" condition whenever another device, such as a computer modem, is connected to TIP/RING telephone service line 30. In particular, the circuitry of Figure 2 functions such that when another device such as a modem is connected to telephone service line 30, the resulting drop in the DC component of the service line voltage causes the circuitry of Figure 2 to go "off-line", allowing the modem or other device to take full control of the line. As would be apparent to one of ordinary skill in the art of circuit design, diode bride 38 is responsible for a 1.4-volt voltage drop; zener diode D1 is, in the presently disclosed embodiment of the invention, responsible for a 6.2-volt voltage drop. Internal circuitry of voice circuit 36 is responsible for another 2-volt voltage drop, so that any voltage less than 2.0-volts will be insufficient to keep voice circuit 36 on-line. The combined effect of each of these voltage drops is that whenever the DC component of the signal on TIP/RING service line 30 drops below 9.6-volts (1.4-volts from diode bride 38 plus 6.2-volts from zener diode D1 plus 2-volts from voice circuit 36 equals 9.6 volts), voice circuit 36 will go off-line, putting telephone 10 in an "on-hook" condition.

The remainder of the circuitry of Figure 2 constitutes a conventional telephone speech circuit well-known in the field of telephony, and will not be discussed herein in detail. A listing of component values for the component in the circuitry of Figure 1 is provided in Table 1 below:

4

**TABLE 1**

RESISTORS

| COMPONENT | VALUE |
|---|---|
| R1 | $4.7\Omega\frac{1}{2}W$ |
| R2 | $4.7k\Omega$ |
| R3 | $68\Omega$ $\frac{1}{2}W$ |
| R4 | $75k\Omega$ |
| R5 | $3.9k\Omega$ |
| R6 | $2.7k\Omega$ |
| R7 | |
| R8 | $470k\Omega$ |
| R9 | $4.7k\Omega$ |
| R10 | $47\Omega$ $\frac{1}{2}W$ |
| R11 | $68\Omega$ |
| R12 | $1k\Omega$ |
| R13 | $270\Omega$ |
| R14 | $100k\Omega$ |
| R15 | $1.5k\Omega$ |
| R16 | $270\Omega$ |
| R17 | $15k\Omega$ |
| R18 | $1.2k\Omega$ |
| Vol. Control (22) | $0 - 50k\Omega$ |

## CAPACITORS

| COMPONENT | | VALUE |
|---|---|---|
| C1 | . . . . . . . . . . . . . . . . . . . . . . | .0.022F |
| C2 | . . . . . . . . . . . . . . . . . . . . . . | 0.047F |
| C3 | . . . . . . . . . . . . . . . . . . . . . . | 0.022F |
| C4 | . . . . . . . . . . . . . . . . . . . . . . . | 470pF |
| C5 | . . . . . . . . . . . . . . . . . . . . . . . | 470pF |
| C6 | . . . . . . . . . . . . . . . . . . . . . . . | $10\mu F$ |
| C7 | . . . . . . . . . . . . . . . . . . . . . . . | 470pF |
| C8 | . . . . . . . . . . . . . . . . . . . . . . | 0.047F |
| C9 | . . . . . . . . . . . . . . . . . . . . . . . | 470pF |
| C10 | . . . . . . . . . . . . . . . . . . . . . . | 0.22F |
| C11 | . . . . . . . . . . . . . . . . . . . . . . | 0.047F |
| C12 | . . . . . . . . . . . . . . . . . . . . . . | 0.1F |
| C13 | . . . . . . . . . . . . . . . . . . . . . . | 470pF |
| C14 | . . . . . . . . . . . . . . . . . . . . . | 0.047F |
| C15 | . . . . . . . . . . . . . . . . . . . . . . . | $10\mu F$ |
| C16 | . . . . . . . . . . . . . . . . . . . . . . | $47\mu F$ |
| C17 | . . . . . . . . . . . . . . . . . . . . . . | 470pF |
| C18 | . . . . . . . . . . . . . . . . . . . . . . . | $1\mu F$ |

## DIODES

| COMPONENT | | VALUE |
|---|---|---|
| D1 | . . . . . . . . . . . . . . . . . . . . . . | 6.2V |
| D2 | . . . . . . . . . . . . . . . . . . . . . . . | 15V |
| D3 | . . . . . . . . . . . . . . . . . . . . . . . | 15V |
| D4 | . . . . . . . . . . . . . . . . . . . . . . . | 15V |

As noted above, telephone headset 10 in accordance with the presently disclosed embodiment of the invention is adapted for use as a companion to other telephone-related devices, particularly computer modems. In Figure 3, a block diagram illustrating the interconnection of headset 10 with a modem 50 that is incorporated into a computer 52 is shown. In accordance with the present invention, TIP/RING service line 30 is applied to a one-line to two-line splitter 54, so that line 30 may be applied both to modem 50 (via two-conductor wire 56), and to headset 10, via cable 16, previously described with reference to Figure 1.

Computer 52 of Figure 3 may be any one of the wide variety of commercially-available personal and/or business computers, including but not limited to those of the "notebook" or "laptop" variety which are easily transported from place to place. An example of a personal computer with which the present invention may be practiced is disclosed in U.S. Patent No. 4,942,606 to Kaiser et al. entitled "Computer With Improved Keyboard Password Functions", which is hereby incorporated by reference. One well-known and commercially available computer which is deemed by the inventors to be suitable for the purposes of the present invention is the Toshiba T1000SE in which modem 50 is integrated within the computer housing. The Toshiba T1000SE modem is described in "Toshiba Internal Modem User's Manual T24D, 2400BPS", published by Toshiba and having publication number C127-0390A2, which is also hereby incorporated by

6

reference. Although specific computers and modems have been identified herein, it is to be understood that such identification has been made for the purposes of illustration only, and that any of the widely-known and commercially available computers capable of operation with a modem may be suitable for use in conjunction with the present invention.

It is to be understood that some commercially available modems are provided with a built-in equivalent of splitter 54, allowing cable 16 of headset 10 to be plugged directly into the modem. In such a case, cable 56 and external splitter 54 are rendered unnecessary. It is also to be understood that modem 50 may be external to computer 52, rather than internal, with modem 50 coupled to a serial I/O port of computer 52 via a standard multiple-conductor cable not shown in Figure 3.

In operating the apparatus of Figure 3, the user begins by turning telephone hook-switch 22 ON and then instructing modem 52 to dial a specified telephone number. As would be apparent to one of ordinary skill in the use of computers, this is typically accomplished using off-the-shelf communications software that is usually provided by the manufacturer of modem 50. When modem 52 turns on and begins to connect with telephone service line 30, headset 10 will automatically go off-line, through operation of the level-detection circuitry previously described with reference to Figure 2. Once the modem has completed the dialing sequence (which is usually audible by means of a speaker or the like disposed within modem 50, and may also be accompanied by a visual indication of dialing on the display screen of computer 52), the user causes the modem to switch off, such as by depressing the 'ESC' key on the keyboard of computer 52. The level detection circuitry of telephone 10 will automatically reactivate the circuitry described with reference to Figure 2, and voice communication will be enabled. During voice communication, the volume level of the receiver transducer of headset 14 is controlled by volume control 22, previously described with reference to Figures 1 and 2.

During voice communication, the user can arrange with the receiving party to switch to modem communication, at which point both the user and the receiving party can attach modems to the telephone line. In the case of the user, this is accomplished by merely re-activating modem 50, which will have the effect of automatically causing telephone 10 to go off-line, so that modem communication is not disturbed.

When modem communication has ceased, the user causes modem 50 to turn off, as by depressing the 'ESC' key again, which will automatically re-activate telephone 10, so that voice communication can be resumed. The telephone link can be terminated by switching volume control 22 to its OFF position.

From the foregoing detailed description of a particular embodiment of the present invention, it should be apparent that a telephone which is particularly adapted for use with a computer modem has been disclosed. Although a particular embodiment of the present invention has been disclosed in detail, this is intended to be for illustrative and not limiting purposes, and it is to be understood that various alterations, substitutions, or modifications may be made therein without departing from the spirit and scope of the present invention, as defined in the appended claims.

In particular, while an embodiment of the present invention has been disclosed in which the voice circuitry (Figure 2 above) is contained within a separate external housing, the inventors have also implemented the present invention in such a way that the voice circuitry is contained on a small printed circuit board disposed within computer 52, with a modular connection point being disposed on the outer surface of computer 52 allowing connection of headset 14 thereto.

Also, although particular components of the telephone in accordance with the disclosed embodiment have been specifically identified (such as headset 14 and voice circuit 36), it is to be understood that other commercially available substitutes therefor may be employed in practicing the present invention.

## Claims

1. A telephone instrument adapted to be coupled to a conventional two-wire telephone service line, said telephone comprising:

   a headset comprising a microphone transducer and a receiver transducer;

   a voice circuit coupled between said headset and said telephone service line, said voice circuit having a power input with a predetermined activation threshold signal level;

   a signal rectifier to be coupled to said telephone service line and having an output signal level;

   a level detector coupled to said signal rectifier and to said voice circuit power input, said level detector having an output signal level exceeding the voice circuit power input activation threshold signal level when the signal rectifier output signal level exceeds a predetermined output signal level.

2. A telephone instrument adapted to be coupled to a conventional two-wire telephone service line to which a computer modem is also coupled, said modem, when activated, producing a voltage drop on said telephone service line, said telephone comprising:

a headset comprising a microphone transducer and a receiver transducer;

a voice circuit coupled between said headset and said telephone service line, said voice circuit having a power input with a predetermined activation threshold signal level;

a signal rectifier to be coupled to said telephone service line and having an output signal level;

a level detector coupled to said signal rectifier and to said voice circuit power input, said level detector having an output signal level exceeding the voice circuit power input activation threshold signal level when the signal rectifier output signal level exceeds a predetermined output signal level; and when said modem is activated, said level detector output signal does not exceed the voice circuit power input threshold activation signal level.

3.   A method of operating a system having telephone and a computer modem jointly coupled to a conventional two-wire telephone service line, comprising the steps of:

(a) monitoring, in said telephone, a DC voltage level derived from said telephone service line;

(b) de-activating said telephone whenever said modem is activated;

(c) activating said telephone whenever said modem is de-activated;

such that said telephone is prevented from interfering with operation of said modem.

4.   A computer system, comprising:

a main processing unit;

an alphanumeric keyboard;

a display monitor;

a telephone modem, to be coupled to a conventional two-wire telephone service line, said modem being activated and deactivated under control of commands entered on said alphanumeric keyboard;

a telephone unit having a receiver transducer and microphone transducer;

a voice circuit, coupled to said telephone unit, said voice circuit having a power input with a predeterined activation threshold signal level;

a signal rectifier, to be coupled to said telephone service line and having an output signal level;

a level detector coupled to the signal rectifier and having an output signal level exceeding the voice circuit activation threshold signal level when the signal rectifier output signal level exceeds a predetermined output signal level, and

when said modem is activated, said rectifier output signal level does not exceed said voice circuit activation threshold signal level.

# FIG.1

# FIG.3

FIG.2